# DEMANDE DE BREVET EUROPEEN

(11) **EP 0 777 968 A1**
(43) Date de publication de la demande: **11.06.1997**
(21) Numéro de dépôt: 95203393.4
(22) Date de dépôt: 07.12.1995
(51) Int. Cl.: A23B 7/08, A23L 3/015

(54) **Conservation de fruits**

(71) Demandeur: SOCIETE DES PRODUITS NESTLE S.A., 1800 Vevey (CH)
(72) Inventeur: Cavadini, Christof, CH-1801 Le Mont Pelerin (CH); Gaier, Walter, CH-1801 Le Mont Pelerin (CH); Lebert, Brigitte, F-74940 Annecy Le Vieu (FR)

(57) **Abrégé**

Procédé de conservation de fruits, dans lequel on enrobe des fruits par une masse sucrée présentant un pH de 2-4 et moins de 60% de sucre, et on pasteurise les fruits dans la masse à une pression d'au moins 200 MPa. Les fruits peuvent être enrobés par au moins 10% en poids d'une masse sucrée choisie dans le groupe formé par les sirops de glucose, fructose et saccharose, et les pulpes de fruits. La masse sucrée peut présenter une Aw compris entre 0,88 et 0,99. L'invention concerne aussi les fruits dans une masse sucrée pasteurisés susceptibles d'être obtenus par le procédé et l'utilisation de ces fruits dans la préparation d'un produit alimentaire.

## Description

La présente invention concerne un nouveau procédé de conservation de fruits entiers ou en morceaux dans une masse sucrée.

### Etat de la technique

Les fruits sont traditionnellement conservés par immersion dans un sirop de sucre et/ou dans de l'alcool, suivi le cas échéant par une pasteurisation à la chaleur. GB 1455812 (Del Monte Corporation) décrit par exemple un procédé dans lequel des morceaux de fruits sont mélangés à un sirop de sucre, puis sont stérilisés à la chaleur et à pression atmosphérique de manière à ce que le contenu liquide et les gaz intercellulaires des fruits diminuent jusqu'à une valeur désirée. Les fruits peuvent alors être égouttés puis être conservés dans l'état, mais de préférence ils sont égouttés, enrobés d'un sirop de sucre puis sont conservés.

JP 60016540 (Meiji Seika Kaisha) décrit une pasteurisation à la chaleur et à basse pression de raisins enrobés par un sirop de sucre alcoolisé. Le nombre de bactéries vivantes est ainsi réduit de 90%. De plus, les tissus du raisins sont suffisamment ramollis pour permettre une pénétration rapide de l'alcool.

FR 2658038 (Marie Brizard et Roger International S.A.) décrit un procédé de fabrication de fruits semi-confits aromatisés, consistant à mélanger un sirop alcoolisé avec des fruits ou des morceaux de fruits dans un récipient, à soumettre le récipient fermé hermétiquement à une montée progressive de la température jusqu'à 40°C, à maintenir le récipient à une température d'au moins 40°C pendant au moins 4 heures, et le cas échéant à soumettre le récipient à une pasteurisation.

Ces méthodes présentent l'inconvénient que les fruits sont cuits lors de la pasteurisation, ce qui provoque des pertes de leur valeur nutritive, de couleur, de goût, et de consistance.

D'autres procédés alternatifs proposent de remplacer la pasteurisation à la chaleur des fruits ou des jus de fruits par un traitement à une haute pression.

EP 480422 (Topan Printing Co. Ltd) décrit ainsi une méthode de traitement d'un jus de fruit dans lequel, on ajoute une enzyme protéolytique dans le jus naturel de fruit qui contient des pectines, et on pasteurise le jus en le soumettant à une haute pression d'au moins 200 MPa. Ce procédé permet d'éliminer les suspensions d'éléments fibreux, de pasteuriser le jus, et de conserver le goût et la couleur naturelle du jus de fruit.

J 890248154 (Dainippon Printing Co. Ltd.) décrit une méthode de conservation de morceaux de pomme dans lequel, on immerge des morceaux de pomme dans une solution d'acide organique ou de sels, on stérilise la suspension par un traitement à une haute pression, et on emballe les morceaux de pomme sous vide ou sous une atmosphère de gaz inerte comprenant moins de 0,05 atm de pression partielle d'oxygène.

### Résumé de l'invention

Le but de la présente invention est de fournir un nouveau procédé de conservation de fruits dans une masse sucrée permettant de conserver la consistance, la couleur, le goût et la valeur nutritive des fruits.

A cet effet dans le procédé de conservation de fruits selon l'invention, on enrobe des fruits par une masse sucrée présentant un pH de 2-4 et moins de 60% en poids de sucre, et on pasteurise le mélange à une pression d'au moins 200 MPa, en particulier à une pression d'au moins 300 MPa à une température comprise entre - 5°C et 80°C pendant 1 à 60 min.

L'invention a également pour objet le produit susceptible d'être obtenu par le procédé, et leur utilisation dans la préparation d'un produit alimentaire.

Le présent procédé permet de conserver au fruit traité une consistance ou une fermeté proche de celle du fruit naturel. Il peut être ainsi avantageusement appliqué à des fruits relativement fragiles.

La présente invention permet aussi de conserver au fruit traité le goût naturel légèrement acidulé des fruits, ceci grâce à l'utilisation d'un pH acide proche de celui des fruits. On évite ainsi une osmose de l'acidité et des arômes des fruits vers le milieu de soutient. Par ailleurs, le traitement du mélange à une haute pression ne détruit pas la valeur nutritive des fruits, en particulier leur teneur en vitamines.

De même, la présente invention permet de conserver la coloration des fruits traités. D'une manière surprenante les anthocyanes des fruits ne se diluent pas dans le milieu de soutient lorsque le milieu présente un pH acide et que son activité d'eau (Aw) est comprise entre 0,88 et 0,99 à 20-25°C.

Enfin, le présent procédé permet de pasteuriser efficacement les fruits au sirop. D'une manière surprenante, une teneur en sucre du sirop inférieure à 60% est indispensable pour obtenir une inactivation microbiologique satisfaisante. Le procédé peut être ainsi avantageusement appliqué à des fruits fragiles et contaminés microbiologiquement par des levures et des moisissures.

Le produit obtenu par le procédé est ainsi idéal pour une utilisation dans la production de produits alimentaires comme les pâtisseries, les yogourts, les laits acidifiés, les crèmes et les glaces, par exemple. Les fruits ne présentent pas de gel ou de film en surface, ni de sucre, et se détachent très bien les uns des autres. Ils peuvent être conservés très bien à température ambiante pour une durée d'au moins 3 semaines à 1 an.

### Description détaillée de l'invention

Par le terme "pasteurisation" on entend une inactivation de tous les germes végétatifs.

Pour mettre en oeuvre le présent procédé, on peut utiliser des fruits frais, congelés ou décongelés, entiers ou en morceaux, par exemple. Toutes sortes de fruits peuvent convenir, seuls ou en mélange. Cependant le procédé peut être avantageusement appliqué à des fruits dont les tissus sont fragiles et la surface contaminée, comme les fraises, les mûres, les framboises, les cassis, les pêches, les abricots, les cerises, les groseilles, les prunes et les raisins, par exemple. De préférence, les fruits frais sont préalablement lavés à l'eau avant d'être traités.

On enrobe alors les fruits en les mélangeant ou en les immergeant dans une masse sucrée. Les sucres pris en compte sont de préférence le glucose, le fructose et le saccharose. Le mélange peut finalement comprendre au moins 1 partie de masse sucrée (m) pour 20 parties de fruits (f), de préférence un ratio m:f compris entre 1:10 et 1:1,25.

On peut utiliser comme masse sucrée toutes les matières présentant moins de 60% en poids de sucre, de préférence une teneur en sucre comprise entre 10% et 60%, notamment 20% à 60% ou 10% à 50%, voire 20% à 50%, par exemple. On peut choisir la masse sucrée dans le groupe formé par les sirops de glucose, fructose et saccharose, et par les pulpes de fruits, seul ou en combinaison. De préférence on utilise une pulpe de fruit provenant du même fruit que celui que l'on veut conserver, par exemple.

La masse sucrée peut contenir d'autres ingrédients tels que des pectines, des hydrocolloides (guar, carraghenan, caroube, amindon, par exemple), des arômes, des conservateurs, des édulcorants comme l'aspartame ou l'acésulfame y compris les polyols tels que le xylitol, les alcools notamment additionnés d'un agent épaississant comme l'amidon ou le carboxy-méthyl-cellulose, en prenant garde toutefois à ce que le degré d'alcool dans le sirop ne dépasse pas 2-15°, par exemple.

La masse sucrée doit également présenter un pH de 2-5, de préférence un pH similaire à celui des fruits que l'on veut conservés, c'est à dire un pH ne variant pas plus de 1 unité de pH par rapport à celui des fruits, de préférence 0,5 unité. On peut ajuster le pH de la masse sucrée par l'ajout d'acides ou de tampons basés sur le citrate, l'ascorbate, le malate ou d'autres acides de fruits connus de l'homme du métier, par exemple.

En particulier, il peut être avantageux de s'assurer que la masse sucrée présente une activité d'eau (Aw) comprise entre 0,88 et 0,99 à 20-25°C, de préférence comprise entre 0,88 et 0,95. Cette activité peut être déterminée au moyen du test décrit ci-après, et peut être ajustée en fonction de la teneur en sucre ou d'autres composés de la masse sucrée, par exemple. Généralement une teneur en sucre inférieure à 60% devrait donner une Aw supérieure à 0,88, une teneur en sucre inférieure à 40% devrait donner une Aw supérieure à 0,95, et une teneur en sucre supérieure à 20% devrait donner une Aw inférieure à 0,98, par exemple.

On peut laisser reposer les fruits dans la masse pendant quelques minutes à quelques heures, cependant il est préférable de directement pasteuriser le mélange. Pour cela, on soumet le mélange à une pression d'au moins 200 MPa pendant un temps et une température adéquats pour pasteuriser le mélange sans toutefois le cuire. Il faut noter que plus le temps et/ou la température de traitement est élevé, moins il est nécessaire d'appliquer une pression élevée pour obtenir une pasteurisation satisfaisante. A titre d'indication, on peut ainsi soumettre le mélange à une pression d'au moins 300 MPa, voire 380 Mpa ou 500 MPa, à une température de -5°C à 80°C, de préférence de 0°C à 50°C, pendant 1 à 60 min, par exemple.

On peut aussi appliquer plusieurs traitements consécutifs de haute pression, par exemple.

Pour appliquer une haute pression hydrostatique, c'est à dire transmise par un fluide hydrostatique, on peut isoler le mélange du liquide utilisé pour transmettre la haute pression, par exemple de l'eau ou de l'huile, par des moyens d'emballage notamment dans des récipients déformables en plastique ou en aluminium, par exemple. Ces récipients peuvent être ensuite placés dans une chambre d'un dispositif de haute pression, par exemple un autoclave adéquat, dans laquelle on applique le traitement sous haute pression pendant un temps et à une température adéquats pour obtenir une pasteurisation sans cuisson. Le temps de traitement commence à partir du moment où l'on atteint la pression et la température désirées, le temps nécessaire pour atteindre ces valeurs étant en moyenne de l'ordre de 1 min, par exemple.

On peut aussi envisager d'amener le mélange par le moyen de conduits appropriés dans une chambre d'un dispositif de haute pression, par exemple un autoclave adéquat, dans lequel on appliquera la pression et la température désirées, par exemple.

Les fruits au sirop pasteurisés peuvent alors être conservés pendant au moins 3 semaines dans leur sirop sans que l'on observe de changements substantielles de leur goût, leur consistance et leur couleur. Ils peuvent être aussi égouttés, puis être conservés dans l'état pasteurisé ou stérilisé, ou encore être enrobés d'un nouveau sirop, par exemple. Il n'est également pas nécessaire d'emballer les fruits pasteurisés dans une atmosphère dépourvue d'oxygène.

La présente invention est décrite plus en détail par les exemples présentés ci-après. Ces exemples sont précédés d'une description des milieux de culture et d'un test de détermination de l'activité d'eau. Il va de soi, toutefois, que ces exemples sont donnés à titre d'illustration de l'objet de l'invention dont ils ne constituent en aucune manière une limitation. Les pourcentages sont donnés en poids sauf indication contraire.

### Activité d'eau

L'activité d'eau est définie par le rapport entre la pression de vapeur partielle de l'eau à la surface d'un échantillon et la pression de vapeur de l'eau pure à la même température. On peut cependant déterminer indirectement l'Aw par la mesure de l'humidité relative d'équilibre atteinte dans une enceinte fermée à température constante. Pour cela, un échantillon de 2-3 g de sirop selon l'invention est enfermé dans un récipient étanche placé dans une chambre thermostatée entre 20°C et 25°C (AquaLab CX-2, Suisse). L'espace vide autour de cet échantillon atteint à l'équilibre, au bout de 30-60 min, la même valeur Aw que l'échantillon. Le capteur électronique, monté dans le couvercle de fermeture du récipient, mesure alors l'humidité de cet espace vide par l'intermédiaire d'une résistance électrolytique.

### Milieux de culture

- PCA: 0,5% de peptone de caséine, 0,25% d'extrait de levure, 0,1% de D-glucose et 1,4% d'agar si nécessaire.
- OGYE: 0,5% d'extrait de levure, 1% de D-glucose, 0,01% d'oxytetracycline et 1,5% d'agar si nécessaire.
- MEB: 3% d'extrait de malt, 0,3% de peptone de soja, et 1,5% d'agar si nécessaire.
- MEA: 3% d'extrait de malt et 1,5% d'agar si nécessaire.

### Exemple 1

Cet exemple vise à montrer que la concentration en sirop de sucre, notamment un sirop de saccharose, participe à la protection des microorganismes d'une inactivation par la haute pression.

Quatre souches de levures issues de la collection Nestlé du centre de recherche Nestlé de Vers-Chez-les-Blancs, Suisse, sont utilisés dans les essais. Il est à noter que d'autres souches des mêmes genres ou espèces pourraient aussi parfaitement convenir.
- *Saccharomyces cerevisiae* Sc isolée d'un vin blanc de chasselat Suisse ("fendant")
- *Metschnikowia pulcherrima* L1 et L3 isolées des fraises des bois
- *Hanseniaspora uvarum* L2 isolée des fraises des bois

Une solution à 1% d'acide citrique ayant un pH ajusté avec de la soude à 3,9 est utilisée comme milieu expérimental, auquel on ajoute des quantités variables de saccharose. On peut remarquer que le pH de 3,9 correspond en général au pH des fruits.

La solution est stérilisée par autoclavage à 121°C pendant 15 min, puis est inoculée à raison de 1% d'une culture fraîche d'une des quatre souches mentionnées ci-dessus cultivées sur un milieu MEB liquide. La solution inoculée est ensuite répartie dans des sachets en matière plastique stérile et scellés sans bulles d'air. Les sachets sont alors soumis à une pression, une température et pendant un temps tels que la pasteurisation ne soit pas complète, de manière à pouvoir évaluer l'effet de la concentration en saccharose sur l'inactivation des germes. Pour cela, on applique une pression de 380 MPa pendant 5 min à 20°C à l'aide d'une presse (National Forge Europe, Belgium). Il faut toutefois remarquer qu'il est possible d'obtenir une pasteurisation tout à fait satisfaisante si l'on augmente la grandeur d'au moins un des trois paramètres de pasteurisation, qui sont la pression, la température et le temps de traitement.

On étale ensuite des dilutions des milieux traités sur le milieu de nutrition MEB, et on compte le nombre de colonies de levures survivantes qui se forment, c'est à dire le nombre de CFU/ml de milieu (CFU est l'abréviation de l'expression "colony forming unit"). On considère qu'un dénombrement inférieur à 10 CFU/ml (de 0 à 10 CFU/ml) peut être caractéristique d'une pasteurisation complète.

Les résultats présentés dans le tableau 1 ci-après montrent qu'un traitement de 5 min à 380 MPa détruit les levures isolées des fruits d'une façon satisfaisante si la teneur en saccharose est inférieure à 60%. Par contre, si la teneur en saccharose est supérieure à 60%, il devient plus difficile d'éliminer les levures.

**Tableau 1**

| | Souches cibles (résultats donnés en CFU/ml) | | | |
|---|---|---|---|---|
| % de Saccharose | *S. cerevisiae* Sc | *M. pulcherrima* L1 | *H. uvarum* L2 | *M. pulcherrima* L3 |
| 20 | 7,5x10⁵ | 6,2x10⁵ | 1000 | 1,01x10⁶ |
| 30 | <10 | <10 | <10 | <10 |
| 40 | <10 | <10 | <10 | <10 |
| 45 | 90 | <10 | <10 | <10 |
| 50 | 740 | <10 | <10 | <10 |
| 60 | 5,3x10⁵ | <10 | 7,5x10⁵ | 7,5x10⁵ |

### Exemple 2

Cet exemple met en évidence le rôle de l'Aw en fonction du saccharose dans l'inactivation des microorganismes contaminants. A cet effet, 4 milieux différents ayant la même Aw sont utilisés dans les essais:
- jus de framboises pH3,5 + 60% de saccharose: Aw 0,882 à environ 24°C,
- solution 1% citrate pH3,5 + 60% de saccharose: Aw 0,883 à environ 24°C,
- solution 1% citrate pH3,5 + glycérol: Aw 0,885 à environ 24°C,
- solution 1% citrate pH3,5 + chlorure de sodium: Aw 0,885 à environ 24°C.

Chaque milieu est inoculé à raison de 1% d'une culture fraîche de *M pulcherrima* L1 sur un milieu liquide MEB, puis est soumis à différents traitements sous hautes pressions à 20°C, de manière à ce que la pasteurisation ne soit pas complète pour pouvoir évaluer l'effet des milieux sur l'inactivation des germes. On étale ensuite des dilutions des milieux traités sur le milieu de nutrition MEA, et on compte le nombre de colonies de levures survivantes.

Les résultats présentés dans le tableau 2 ci-après montrent que la survie des levures n'est pas seulement due à l'activité d'eau créé par le saccharose. Dans le tampon comprenant du chlorure de sodium ou du glycérol, les levures ne survivent pas à une pression de 500 MPa appliquée pendant 2 min. Par contre, la présence de sucres à un taux de 60% que ce soit dans le tampon ou dans les fruits assure la survie des levures au dessus de 500 MPa. Il semble aussi que le fruit lui même assure une meilleure survie des levures. Par ailleurs, il faut noter que l'inactivation des levures à une pression donnée dépend essentiellement de la durée et de la température de traitement appliquée. A 300 MPa, il suffit ainsi d'augmenter le temps de traitement à au moins 15 min pour obtenir une inactivation satisfaisante des levures.

**Tableau 2**

| | Traitement (résultats donnés en CFU/ml) | | | |
|---|---|---|---|---|
| Milieux | Témoin | 5 min à 300 MPa | 2 min à 500 MPa | 1 min à 700 MPa |
| Framboise | 2,4x10⁶ | 9x10⁵ | 7x10⁴ | 7x10⁵ |
| Sucre | 9,6x10⁵ | 9x10⁵ | 1,3x10⁵ | <100 |
| Glycérol | 10⁶ | 1,8x10⁶ | <10 | <10 |
| NaCl | 8,6x10⁵ | 8x10⁵ | <10 | <10 |

### Exemple 3

Cet exemple a pour but de déterminer les valeurs d'acidité et de concentration en saccharose du milieu qui sont favorables à la pasteurisation et à la conservation du goût, de la couleur et de la consistance des fruits. A cet effet, trois milieux de traitement ont été utilisés pour conserver les fruits:
- milieu A: eau comprenant 20, 40, 60 ou 80% de saccharose,
- milieu B: eau comprenant 20, 40, 60 ou 80% saccharose + 1% acide citrique,
- milieu C: milieu B dont le pH est ajusté à pH 3,9 avec de la soude.

On utilise des framboises Frisco-Findus (Suisse) congelées. On mélange 100 g de framboises décongelées à température ambiante à 200 ml d'un des milieux ci-dessus, on emballe le tout dans des sachets fermés hermétiquement, en prenant garde à ne pas laisser subsister de bulles d'air, puis on les soumet à une pression de 380 MPa pendant 5 min à 20°C à l'aide de la presse mentionnée à l'exemple 1.

On dénombre les levures, les moisissures et les bactéries survivantes en prélevant stérilement 10 g de fruits, en les broyants et en les diluant stérilement dans un tampon Tris pH7, puis en étalant des dilutions sur milieu solide PCA et OGYE que l'on incube 72h à température ambiante. Pour comparaison, on dénombre le nombre initial de levures et de germes totaux, en étalant des dilutions des fruits décongelés sur les milieux PCA et OGYE que l'on incube 72h à température ambiante.

On conserve les fruits au sirop pasteurisés pendant 4 jours à 20°C pour une dégustation par un panel de 15 personnes. Cette dégustation vise à déterminer le goût, la couleur et la consistance des fruits après traitement et conservation, par rapport à ceux des fruits décongelés non-traités.

**Tableau 3**

| | % Saccharose, pH (Aw à 24°C) | Dégustations après 4 jours de conservation à 20°C | Numération PCA (CFU/ml) | Numération OGYE (CFU/ml) | |
|---|---|---|---|---|---|
| | | | | Levure | Moisissure |
| A | 20%, neutre | peu sucré, goût frais, pâle et gonflé | <100 | <100 | <100 |
| | 40%, neutre | sucré, goût frais, fruit pâle et gonflé | 100 | <100 | <100 |
| | 60%, neutre | goût doux sans acidité naturelle fruit rouge et petit | <100 | <100 | <100 |
| | 80%, neutre | bon goût sans acidité naturelle fruit encore plus foncé et petit | 100 | <100 | <100 |
| B | 20%, pH2,5 Aw 0,98 | goût très frais et acide fruit gonflé et pâle | 100 | <100 | <100 |
| | 40%, pH2,44 Aw 0,95 | goût très frais et acide fruit gonflé et pâle | <100 | <100 | <100 |
| | 60%, pH2,15 Aw 0,88 | bon goût et bonne acidité fruits plus petit et plus rouge | <100 | <100 | <100 |
| | 80%, pH1,78 Aw 0,76 | bon goût et bonne acidité fruits encore plus petit | <100 | <100 | <100 |
| C | 20%, pH3,85 | goût acide fruit pâle mou et aqueux | <100 | <100 | <100 |
| | 40%, pH3,83 | goût de fruit plus marqué fruit pâle mou et aqueux | <100 | <100 | <100 |
| | 60%, pH3,90 | bon goût, acidité correcte fruits plus petit et plus rouge | 100 | <100 | <100 |
| | 80%, pH3,85 | bon goût, acidité correcte fruits encore plus petit | <100 | 200 | <100 |
| Témoin | | --- | 2200 | 800 | -- |

Les résultats présentés dans le tableau 3 ci-dessus montrent que les milieux ayant une acidité comprise entre pH2 et pH4 permettent de conserver les arômes de fruits. Il est d'ailleurs préférable de choisir une acidité qui est identique à celle du fruit. De plus, des concentrations en saccharose supérieures à 20% sont nécessaires au maintient correct de la consistance du fruit. Enfin, la couleur du fruit semble moins se diluer à partir d'une concentration en saccharose de 40% (Aw= 0,95 à 24°C) et lorsque le pH est acide.

### Exemple 4

On prépare un mélange de 100 g de framboises congelées Frisco-Findus et de 200 ml d'un sirop comprenant 60% de saccharose et 1% d'acide citrique (pH 2). On emballe hermétiquement et sans bulles d'air le mélange dans des sachets plastiques, et on les soumet à une pression hydrostatique de 380 MPa pendant 5 min à 20°C à l'aide de la presse décrite à l'exemple 1.

Une partie des sachets traités sont stockés à 12°C pendant une période de 21 jours, au cours de laquelle, le 13ième et le 21ième jour, on énumére les contaminants et on déguste les fruits. Une autre partie des sachets sont ouverts, les fruits sont égouttés et sont répartis stérilement sur des milieux solides PCA et OGYE pour une période de 21 jours, au cours de laquelle, le 13ième et le 21ième jour, on dénombre les contaminants et on déguste les fruits. Pour comparaison, on dénombre les contaminants et on procède à un test gustatif pour le reste des sachets venant juste d'être traités.

**Tableau 4**

| Temps (jours) | Conditions de conservation | Dégustations | PCA (CFU/boite) | OGYE (CFU/boite) |
|---|---|---|---|---|
| 0 | dans le sirop égoutté | fruits plus petits, plus rouges, bon goût, bonne acidité | <100 | <100 |
| 13 | dans le sirop | pas de changement par rapport au premier jour | 100 | <100 |
| 13 | égoutté | moins de goût que les fruits dans le sirop au premier jour, aspect un peu déformé, voire ramolli | <100 | <100 |
| 21 | dans le sirop | goût et acidité corrects, perte de consistance, couleur correct | <100 | <100 |
| 21 | égoutté | goût et acidité corrects, consistance ferme, couleur correct | <100 | <100 |
| Témoin non traité | | -- | 2700 | 300 |

Les résultats présentés dans le tableau 4 ci-dessus montrent que les fruits peuvent être conservés pendant au moins 3 semaines, dans leur sirop ou égouttés, sans une perte substantielle de goût, de couleur et de consistance.

### Exemple 5

Comme décrit à l'exemple 4 de EP94109539.0, on réalise une fermentation d'un lait entier et stérilisé comprenant 3,7% de matière grasse et 2,5% de poudre de lait écrémé, avec un cocktail de trois starters congelés comprenant respectivement une souche *S. thermophilus* CNCM I-1422 (CNCM = Collection Nationale de Cultures de Microorganismes, Institut Pasteur, 28 rue du Dr Roux, 75724 Paris Cedex 15, France), une souche *S. thermophilus* CNCM I-1424, et une souche *L. delbruckii subsp. bulgaricus* CNCM I-1420. Chacune de ces souches est directement accessible auprès de la CNCM, et est utilisée traditionnellement dans la fabrication industrielle de yogourt.

On incube le lait à 42°C jusqu'à un pH d'environ 4,65, on le refroidit jusqu'à 4°C, et on lui ajoute 10% en poids de framboises au sirop préparées comme décrit à l'exemple 4 à la différence près qu'elles sont pasteurisées à une pression de 380 MPa pendant 15 min à 20°C.

### Exemple 6

On prépare trois mélanges comprenant, pour le premier mélange 60 g de guar, 460 de sirop de glucose et 40 g d'eau à 90°C, pour le deuxième mélange 40 g de pectine, 336,5 g de saccharose, 800 g d'eau à 90°C et 1,8 g de citrate de sodium, et pour le troisième mélange 2450 g de pulpe de fraises et 1,7 g de sulphate de calcium. On mélange les trois solutions. On ajoute 6 kg de fraises entières congelées. On soumet ensuite les fraises dans la masse sucrée à un traitement à 370MPa à 30°C pendant 5, 10 ou 15 min. On conserve les fraises dans la masse pendant 1 à 8 semaines à 12°C ou 25°C. On détermine ensuite le nombre de colonies de microorganismes vivants contaminants dans le mélange "fraises / masse sucrée" sur les milieux PCA, OGYE et MEA (CFU/ml).

Pour comparaison, on prépare le même mélange de fraises, on ne le soumet pas à un traitement haute pression (HHPT) et on détermine de la même manière le nombre de contaminants sur les milieux PCA, OGYE et MEA (Témoin: CFU/ml).

Les résultats présentés dans le tableau 5 ci-après montrent que les fruits enrobés sont pasteurisés. Leur goût et leur couleur sont également appréciés des dégustateurs, même après 8 semaines de conservation.

**Tableau 5**

| Traitement HHPT (min) Conservation (semaine) Température de conservation (°C) | OGYE (Cfu/ml) Levures/Moisissures | (MEA (CFU/100g) Levures/Moisissure |
|---|---|---|
| Témoin | 93/3 | > 1000/1000 |
| 5 min; 1semaine; 12°C | 0/0 | 0/1 |
| 5 min; 1semaine; 25°C | 0/0 | 0/0 |
| 10 min; 1 semaine; 12°C | 0/0 | 0/1 |
| 10 min; 1 semaine; 25°C | 0/0 | 0/1 |
| 15 min; 1 semaine; 12°C | 0/0 | 0/0 |
| 15 min; 1 semaine; 25°C | 0/0 | 0/1 |
| 5 min; 2 semaine; 12°C | 0/0 | 0/1 |
| 5 min; 2 semaine; 25°C | 0/0 | 0/0 |
| 10 min; 2 semaine; 12°C | 0/0 | 0/0 |
| 10 min; 2 semaine; 25°C | 0/0 | 0/0 |
| 15 min; 2 semaine; 12°C | 0/0 | 0/0 |
| 15 min; 2 semaine; 25°C | 0/0 | 0/2 |
| 5 min; 4 semaine; 12°C | -- | 0/0 |
| 5 min; 4 semaine; 25°C | -- | 0/0 |
| 10 min; 4 semaine; 12°C | -- | 0/0 |
| 10 min; 4 semaine; 25°C | -- | 0/0 |
| 15 min; 4 semaine; 12°C | -- | 0/0 |
| 15 min; 4 semaine; 25°C | -- | 0/0 |
| 5 min; 6 semaine; 12°C | -- | 0/1 |
| 5 min; 6 semaine; 25°C | -- | 0/0 |
| 10 min; 6 semaine; 12°C | -- | 0/0 |
| 10 min; 6 semaine; 25°C | -- | 0/0 |
| 15 min; 6 semaine; 12°C | -- | 0/0 |
| 15 min; 6 semaine; 25°C | -- | 0/1 |
| 5 min; 8 semaine; 12°C | -- | 0/0 |
| 5 min; 8 semaine; 25°C | -- | 0/1 |
| 10 min; 8 semaine; 12°C | -- | 0/0 |
| 10 min; 8 semaine; 25°C | -- | 0/0 |
| 15 min; 8 semaine; 12°C | -- | 0/0 |
| 15 min; 8 semaine; 25°C | -- | 0/0 |
| (le sigle "--" signifie que la détermination des contaminants n'a pas été effectuée) | | |

## Revendications

1. Procédé de conservation de fruits, dans lequel on enrobe des fruits par une masse sucrée présentant un pH de 2-4 et moins de 60% de sucre, et on pasteurise le mélange à une pression d'au moins 200 MPa.

2. Procédé selon la revendication 1, dans lequel le mélange comprend au moins 1 partie de masse sucrée pour 20 parties de fruits.

3. Procédé selon la revendication 1, dans lequel la masse sucrée comprend 10% à 60% en poids de sucre.

4. Procédé selon la revendication 3, dans lequel on choisi la masse sucrée dans le groupe formé par les sirops de glucose, fructose et saccharose, et les pulpes de fruits, seul ou en combinaison.

5. Procédé selon la revendication 1, dans lequel la masse sucrée présente une Aw compris entre 0,88 et 0,99.

6. Procédé selon la revendication 1, dans lequel le pH de la masse sucrée est similaire à celui des fruits.

7. Procédé selon la revendication 1, dans lequel on pasteurise les fruits dans la masse à une pression d'au moins 300 MPa à une température comprise entre -5°C et 80°C pendant 1 à 60 min.

8. Fruits dans une masse sucrée pasteurisés, susceptibles d'être obtenus par le procédé selon l'une des revendications 1 à 7

9. Utilisation des fruits dans une masse sucrée obtenus par le procédé selon l'une des revendications 1 à 8, dans la préparation d'un produit alimentaire.
